(19) Europäisches Patentamt
European Patent Office
Office européen des brevets

(11) Veröffentlichungsnummer: **0 313 998 A2**

# (12) EUROPÄISCHE PATENTANMELDUNG

(21) Anmeldenummer: **88117520.2**

(22) Anmeldetag: **21.10.88**

(51) Int. Cl.4: **H01B 1/12**

Patentansprüche für folgende Vertragsstaaten: ES + GR.

(30) Priorität: **26.10.87 DE 3736114**

(43) Veröffentlichungstag der Anmeldung: **03.05.89 Patentblatt 89/18**

(84) Benannte Vertragsstaaten: **AT BE CH DE ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Feldhues, Michael, Dr.**
**Königsteiner Strasse 1a**
**D-6232 Bad Soden am Taunus(DE)**
Erfinder: **Kämpf, Günther, Dr.**
**Rebhangstrasse 3**
**D-6227 Oestrich-Winkel(DE)**
Erfinder: **Mecklenburg, Thomas, Dr.**
**Freiherr-vom-Stein-Strasse 20**
**D-6308 Butzbach(DE)**

## (54) Modifizierte elektrisch leitende Polymere.

(57) In an sich bekannten elektrisch leitenden Polymeren in der oxidieren (dotierten) Form lassen sich die Anionen beliebig austauschen, wenn das Polymere in Lösung mit einem Salz, welches das vorgesehene Anion enthält, zusammengebracht wird und eine Einstellung des Lösungsgleichgewichts unter Berücksichtigung der Löslichkeitsprodukte der anwesenden Salze vorgenommen wird. Auf diese Weise können die Eigenschaften der elektrisch leitenden Polymeren verschiedenen Aufgaben angepaßt werden.

EP 0 313 998 A2

# Modifizierte elektrisch leitende Polymere

Es ist bekannt, daß sich Heteroaromaten oxidativ, beispielsweise durch anodische Oxidation polymerisieren lassen und dabei elektrisch leitende Polymere bilden, die für die Elektrotechnik, bei Halbleiterbauelementen, Schaltern, Abschirmmaterialien, Solarzellen und als Elektrodenmaterialien bei elektrochemischen Synthesen und in reversiblen Ladungsspeichern Interesse besitzen. Vor allem lösliche, elektrisch leitende Polymere eröffnen aufgrund ihrer Verarbeitbarkeit neue Anwendungsgebiete, wie beispielsweise die antistatische Ausrüstung von Folien und Fasern. Die in dotierten Zustand löslichen, leitenden Polymeren sind allerdings hinsichtlich Langzeitstabilität der elektrischen Leitfähigkeit, thermischer Beständigkeit, Filmbildeeigenschaften und Haftvermögen auf bestimmten Unterlagen verbesserungsbedürftig (vgl. Synthetic Metals 15, 169 (1986).

Die in den positiv dotierten, leitenden Polymeren vorhandenen Ionen bestimmen nämlich in erheblichem Umfang die physikalischen Eigenschaften dieser Verbindungen, insbesondere die Größe und Langzeitkonstanz der elektrischen Leitfähigkeit, die thermische Stabilität und die Filmbildeeigenschaften. (vgl. J. Polymer Sci., Pol. Phys. Ed. Vol. 22, 33 (1984)). So ist beispielsweise gerade das bei der elektrochemischen Herstellung von leitenden Polymeren wegen seiner Oxidationsbeständigkeit und der guten Zugänglichkeit von in organischen Lösemitteln löslichen Salzen oft benutzte Perchlorat-Anion in Gegenwart organischer Verbindungen bei thermischer und mechanischer Belastung labil und deshalb für die meisten Anwendungen ungeeignet. Oft werden auch leitende Polymere mit giftigen, reaktiven und feuchtigkeitsempfindlichen Anionen wie beispielsweise Hexafluoroarsenat, Hexafluoroantimonat, Hexachloroantimonat oder Tetrachloroferrat synthetisiert. Diese Polymeren sind in dieser Form für die meisten Anwendungen ebenfalls ungeeignet. Bei den bekannten leitenden Polymeren war es bisher weder duch chemische noch durch elektrochemische Dotierung bei der Polymerisation möglich, beliebige Anionen gezielt in die Polymeren bzw. Oligomeren einzubringen, ohne den Verlauf der Polymerisation und damit beispielsweise den Polymerisationsgrad zu beeinflussen. Beim nachträglichen Austausch der Anionen gegen andere mittels der bekannten Reaktionsfolge -Reduktion zur undotierten Form und anschließende Oxidation in Gegenwart eines neuen Anions - wurde außerdem ein "Memory-Effekt" des räumlichen Aufbaus des Polymeren beobachtet. Polymere mit modifizierten Eigenschaften, beispielsweise hinsichtlich elektrischer Leitfähigkeit, Langzeitstabilität der Leitfähigkeit, thermischer Stabilität, Löslichkeit, Filmbildeeigenschaften und Haftvermögen auf wechselnden Unterlagen konnten auf diese Weise nicht zufriedenstellend erhalten werden.

Es bestand daher die Aufgabe, ein Verfahren zu finden, mit welchem die Anionen in der positiv dotierten Form der leitenden Polymeren gegen beliebige Anionen in einfacher Weise ausgetauscht werden können.

Es wurde gefunden, daß der Anionenaustausch in Lösung durch eine Einstellung des Lösungsgleichgewichts unter Berücksichtigung der Löslichkeitsprodukte der anwesenden Salze gelingt.

Die Erfindung betrifft somit ein intrinsisch elektrisch leitendes Polymeres in der oxidierten (dotierten) Form, bestehend aus wenigstens einem polymeren Radikalkation und einer dazu äquivalenten Menge wenigstens eines Anions, das dadurch gekennzeichnet ist, daß das polymere Radikalkation in statistischen Mittel besteht aus 20 bis 100 % Struktureinheiten, die sich durch Verknüpfung in 2-Stellung und/oder 5-Stellung von mindestens einem Monomeren der Formel (I) ableiten

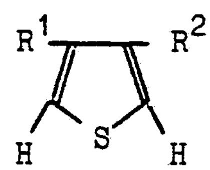

(I),

worin

$R^1$ eine $C_2$-$C_{22}$-Alkylgruppe, $-CH_2O(CH_2CH_2O)_nCH_3$ mit n = 1 bis 4, eine $C_1$-$C_{12}$-Alkoxygruppe oder $-O(CH_2CH_2O)_nCH_3$ mit n = 1 bis 4 und

$R^2$ ein Wasserstoffatom, eine $C_1$-$C_{12}$-Alkylgruppe oder eine $C_1$-$C_{12}$-Alkoxygruppe darstellen,

0 bis 80 % Struktureinheiten, die sich von mindestens einem elektronenreichen Heteroaromaten, welcher elektrisch leitende Polymere bilden kann und mit den Monomeren (I) copolymerisierbar ist, ableiten,

und das Anion im statistischen Mittel besteht aus 0 bis 100 % wenigstens eines anorganischen Anions aus der Gruppe der Halogenide, Pseudohalogenide, Halogenokomplexanionen eines Elements der Gruppen 3a, 4a und 5a des Periodensystems der Elemente, Oxokomplexanionen eines Elements der Gruppen 3a, 4a, 5a, 6a und 7a und anionischen Komplexe der Übergangsmetalle, 100 bis 0 % wenigstens eines monomeren oder polymeren organischen Anions mit wenigstens einem Atom oder wenigstens einer funktionellen Gruppe, das/die wenigstens eine negative Ladung tragen kann und die

konjugate Base zu einer Brönsted-Säure darstellt, wobei der chemische Aufbau und der Polymerisationsgrad des polymeren Radikalkations unabhängig vom jeweils eingebauten Anion sind.

Die Erfindung betrifft ferner ein modifiziertes, intrinsisch elektrisch leitendes Polymeres nach Anspruch 1, das dadurch gekennzeichnet ist, daß 10 bis 100 Gew.-% des Anions ein Phenolat-, Carboxylat-, Phosphonat- und/oder Sulfonatanion sind.

Die erfindungsgemäßen Polymeren enthalten im Radikalkation die gleichen Struktureinheiten wie die löslichen, leitenden Polymeren, aus denen sie hergestellt werden. Diese leiten sich durch Verknüpfung in 2-Stellung und/oder 5-Stellung von mindestens einem Monomeren der allgemeinen Formel (I) ab

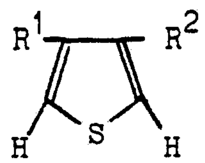

(I),

worin

$R^1$ eine $C_2$-$C_{22}$-, vorzugsweise $C_2$-$C_{12}$-, insbesondere $C_2$-$C_4$-Alkylgruppe, $-CH_2O(CH_2CH_2O)_nCH_3$ mit n = 1 bis 4, vorzugsweise 1 oder 2, eine $C_1$-$C_{12}$-, vorzugsweise $C_1$-$C_4$-, insbesondere $C_1$-$C_2$-Alkoxygruppe oder $-O(CH_2CH_2O)_nCH_3$ mit n = 1 bis 4, vorzugsweise 1 oder 2 bedeutet und

$R^2$ ein Wasserstoffatom, eine $C_1$-$C_{12}$-, vorzugsweise $C_1$-$C_4$-Alkylgruppe, insbesondere Methylgruppe oder eine $C_1$-$C_{12}$-, vorzugsweise $C_1$-$C_4$-Alkoxygruppe, insbesondere Methoxygruppe darstellt.

Beispiele für Vertreter der Formel (I) sind 3-Butylthiophen, 3-Pentylthiophen, 3-Hexylthiophen, 3-Octylthiophen, 3-Dodecylthiophen, 3-(Methoxyethoxyethoxymethyl)-thiophen, 3,4-Diethylthiophen, 3-Butyl-4-methylthiophen, 3-Methoxythiophen, 3-Ethoxythiophen, 3-Propoxythiophen, 3-(Methoxyethoxy)-thiophen, 3-Methoxy-4-methylthiophen, 3-Ethyl-4-methoxythiophen, 3-Butyl-4-methoxythiophen, 3-Ethoxy-4-methylthiophen, 3-Ethoxy-4-ethylthiophen, 3-Butoxy-4-methylthiophen, 3,4-Dimethoxythiophen, 3-Ethoxy-4-methoxythiophen, 3-Butoxy-4-methoxythiophen. Auch Struktureinheiten, die sich von Gemischen der Monomeren (I) ableiten, können im Radikalkation enthalten sein.

Die erfindungsgemäßen Polymeren können im Radikalkation auch Struktureinheiten enthalten, welche sich durch Verknüpfung in 2-Stellung und/oder 5-Stellung von wenigstens einem der bekannten elektronenreichen Heteroaromaten, vorzugsweise unsubstituierte oder in 3-Position oder 3- und 4-Position substituiertem Pyrrol, Furan oder Thiophen, die elektrisch leitende Polymere bilden können und mit den Monomeren (I) copolymerisierbar sind, ableiten.

Geeignete Comonomere sind beispielsweise Pyrrol, 3-Methylpyrrol, 3-Chlorpyrrol, 3-Acetylpyrrol, 3,4-Dimethylpyrrol, N-Methylpyrrol, Thieno[3,2-b]pyrrol, Carbazol, Thiophen, 3-Methylthiophen, 3,4-Dimethylthiophen, Isothianaphthen, Thieno[2,3-b]thiophen, Dithieno[3,2-b; 2′,3′-d]thiophen, Dibenzothiophen, 1,2-Di-(2-thienyl)ethen, 1,2-Di-(3-methylthien-2-yl)-ethen, 1,2-Di-(2-furanyl)ethen, 1-(2-Furanyl)-2-(2-thienyl)ethen, 1-(2-Pyrrolyl)-2-(2-thienyl)ethen, 1,4-Di-(2-thienyl)-buta-1,3-dien, 1,4-Di-(2-furanyl)-buta-1,3-dien, 1,4-Di-(2-thienyl)-benzol, Terthienyl (2,5-Di-(2-thienyl)-thiophen), 2,5-Di-(2-thienyl)-pyrrol, 2,2′-Bithiophen, 3,3′-Dimethyl-2,2′-bithiophen, 3,3′-Dimethoxy-2,2′-bithiophen, 3,4′-Dimethoxy-2,2′-bithiophen, 4,4′-Dimethoxy-2,2′-bithiophen, vorzugsweise 3-Methylthiophen.

Die erfindungsgemäßen Polymeren enthalten im Radikalkation 3 bis 100 Struktureinheiten, vorzugsweise 5 bis 50 Struktureinheiten. Die Menge dieser Struktureinheiten, die sich von mindestens einem Monomeren der Formel (I) ableiten, beträgt in statistischen Mittel 20 bis 100 Gew.-%, vorzugsweise 50 bis 100 Gew.-% und insbesondere 90 bis 100 Gew.-%, bezogen auf die im undotierten Polymeren vorhandenen Struktureinheiten. Die Menge der Struktureinheiten, die sich von Comonomeren ableiten, beträgt in statistischen Mittel 0 bis 80, vorzugsweise 0 bis 50 Gew.-%.

Die erfindungsgemäßen elektrisch leitenden Polymeren liegen im oxidierten (dotierten) Zustand vor, wobei die Zahl der positiven Ladungen der Zahl der eingesetzten löslichen, leitenden Polymeren, aus denen sie hergestellt werden, entspricht, und bezogen auf die Zahl der Monomereinheiten, zumeist 10 bis 30 %, vorzugsweise 15 bis 25 % beträgt.

Die erfindungsgemäßen Polymeren enthalten eine zur Menge des Radikalkationes äquivalente Menge von mindestens einem Anion, wobei sich 10 bis 100 %, vorzugsweise 50 bis 100 %, insbesondere 80 bis 100 % der Anionen von den Anionen unterscheiden, die im eingesetzten löslichen, leitenden Polymeren vorhanden waren. Dabei können neben den aus dem Herstellungs- bzw. Dotierprozeß für das eingesetzte Polymere stammenden Anionen alle anorganischen und organischen Anionen enthalten sein, die zusammen mit einem anorganischen oder organischen Kation ein Salz bilden, das in einem Lösemittel löslich ist, in dem auch das eingesetzte leitende Polymere löslich ist. Der chemische Aufbau und der Polymerisationsgrad des polymeren Radikalkations ist somit unabhängig vom jeweils eingebauten Anion.

Geeignete anorganische Anionen finden sich in der Gruppe der Halogenide, Pseudohalogenide, Halogenokomplexanionen, vorzugsweise Fluoro-

und Chlorokomplexanionen eines Elements der Gruppen 3a, 4a und 5a des Periodensystems der Elemente, vorzugsweise von Bor, Silizium, Phosphor, Arsen, Antimon, Oxokomplexanionen eines Elements der Gruppen 3a, 4a, 5a, 6a und 7a, vorzugsweise von Bor, Kohlenstoff, Silizium, Stickstoff, Phosphor, Arsen, Antimon, Schwefel, Chlor, Brom, Jod, anionische Komplexe, vorzugsweise Fluoro-, Chloro-, Oxo-, Cyano-, Phosphin-, Carbonyl-, Cyclopentadienylkomplexe der Übergangsmetalle, vorzugsweise von Kupfer, Silber, Gold, Titan, Vanadium, Chrom, Molybdän, Wolfram, Mangan, Eisen, Kobalt, Rhodium, Nickel, Palladium, Platin. Besonders bevorzugt sind das Tetrafluoroboratanion und des Hexafluorophosphatanion.

Als Beispiele für geeignete anorganische Anionen seien hier genannt: $F^-$, $Cl^-$, $Br^-$, $J^-$, $CN^-$, $OCN^-$, $SCN^-$, $N_3^-$, $BF_4^-$, $PF_6^-$, $AsF_6^-$, $SbF_6^-$, $BO_3^{3-}$, $NO_3^-$, $PO_4^{3-}$, $H_2PO_4^-$, $SO_4^{2-}$, $HSO_4^-$, $ClO_4^-$, $JO_4^-$, $Cu[(CN)_4]^{3-}$, $Au[(CN)_2]^-$, $CrO_4^{2-}$, $MnO_4^-$, $FeCl_4^-$, $Fe[(CN)_6]^{3-}$, $Co[(CN)_6]^{3-}$, $NiCl_4^{2-}$, $RhCl_6^{3-}$, $PtCl_6^{2-}$.

Geeignet sind alle monomeren oder polymeren organischen Anionen mit wenigstens einem Atom oder wenigstens einer funktionellen Gruppe, die wenigstens eine negative Ladung tragen können und die konjugate Base zu einer Brönsted-Säure darstellen, beispielsweise Phenolate, vorzugsweise mit Elektronenakzeptoren substituierte Phenolate, Carboxylate, vorzugsweise Alkylcarboxylate, Perfluoralkylcarboxylate, Alkenylcarboxylate, Arylcarboxylate, Phosphonate und Phosphinate, vorzugsweise Alkylphosphonate, und -phosphinate, Perfluoralkylphosphonate und -phosphinate, Alkenylphosphonate und -phosphinate, Arylphosphonate und -phosphinate, Sulfonate, vorzugsweise Alkylsulfonate, Perfluoralkylsulfonate, Alkenylsulfonate, Arylsulfonate.

Als Beispiel für die konjugaten Brönsted-Säuren von geeigneten organischen Anionen seien hier genannt: 2,4-Dinitrophenol, Pikrinsäure (2,4,6-Trinitrophenol), Poly(methylenkresol) (Alnovol), Essigsäure, Octansäure, Perfluoroctansäure, Acrylsäure, Polyacrylsäure, Polyacrylsäureethylester-Polyacrylsäure-Copolymer, Methacrylsäure, Polymethacrylsäure, Polymethacrylsäuremethylester-Polymethacrylsäure-Copolymer, Poly(2-acrylamido-2-methyl-1-propansulfonsäure), Benzoesäure, Methanphosphon säure, Methansulfonsäure, Octansulfonsäure, Trifluormethansulfonsäure, Perfluorethansulfonsäure, Perfluoroctansulfonsäure, Vinylsulfonsäure, Polyvinylsulfonsäure, Benzolsulfonsäure, Toluolsulfonsäure, Styrolsulfonsäure, Polystyrolsulfonsäure, Polystyrol-Polystyrolsulfonsäure-Copolymer, Campher-3-sulfonsäure.

Die Herstellung der erfindungsgemäßen, modifizierten elektrisch leitenden Polymeren erfolgt durch Austausch von Anionen in einem bekannten löslichen, elektrisch leitenden Polymeren gegen anorganische Anionen und/oder monomere oder polymere organische Anionen. Die Reaktion findet statt in einem für das eingesetzte bekannte leitende Polymere geeigneten Lösemittel in Gegenwart eines in diesem Lösemittel löslichen, das neue Anion enthaltenden Salzes. Der Anionenaustausch findet durch Einstellung des Lösungsgleichgewichtes unter Berücksichtigung der Löslichkeitsprodukte der anwesenden Salze statt. Die Gleichgewichtszusammensetzung wird gegebenenfalls durch Verdampfen des Lösemittels oder nachträgliches Ausfällen des modifizierten leitenden Polymeren fixiert.

Die Löslichkeit des zum Anionenaustausch eingesetzten leitenden Polymeren in der oxidierten (dotierten) Form ist eine wesentliche Voraussetzung für das erfindungsgemäße Verfahren. Geeignete lösliche, elektrisch leitende Polymere sind beispielsweise Poly(3-methoxythiophen)-tetrafluoroborat, Poly(3-methoxythiophen)perchlorat, Poly(3-methoxy-thiophen)tetrachloroferrat, Poly(3-ethoxythiophen)tetrafluoroborat, Poly(3-(methoxyethoxyethoxy)thiophen)-hexafluorophosphat, Poly(3,4-dimethoxythiophen)-tetrafluoroborat, Poly(3-butylthiophen)-hexafluoroantimonat, Poly(3-dodecylthiophen)-hexafluorophosphat, Poly(3-methylthiophen-co-3′-n-butylthiophen 50:50)hexafluoroantimonat, Poly(3-methylthiophen-co-3′-n-butylthiophen 75:25)-hexafluorophosphat, Poly(3-(methoxyethoxyethoxymethyl)-thiophen)-hexafluorophosphat.

Die Konzentration des eingesetzten Polymeren beträgt 1 bis 100 g, vorzugsweise 5 bis 50 g leitendes Polymeres pro $dm^3$ Lösemittel.

Für den erfindungsgemäßen Anionenaustausch werden Salze benötigt, die das in das leitende Polymere einzubauende neue Anion enthalten und in einem Lösemittel löslich sind, in dem sich das eingesetzte leitende Polymere ebenfalls löst. Als Kationen, die diesen Salzen die geforderte Löslichkeit verleihen, sind neben den Erdalkalimetallkationen und $H^+$ insbesondere die Alkalimetallkationen geeignet. Als besonders günstig erweisen sich Kationen des Typs $R_4N^+$ und $R_4P^+$, wobei die Substituenten R jeweils unabhängig voneinander ein Wasserstoffatom, eine $C_1$-$C_{12}$-, vorzugsweise $C_1$-$C_4$-Alkylgruppe, eine Cycloalkylgruppe, eine Arylgruppe oder eine Arylalkyl-, vorzugsweise Benzylgruppe bedeuten.

Die Salzkonzentration liegt im allgemeinen im Bereich von 0,01 bis 10 mol, vorzugsweise von 0,1 bis 1 mol Salz pro $dm^3$ Lösemittel. Das Verhältnis der über das Salz zugefügten Anionenäquivalente zu den im leitenden Polymeren vorhandenen Anionenäquivalenten beträgt 0,1 bis 100, vorzugsweise 0,5 bis 20. Für einen möglichst weitgehenden Austausch der im eingesetzten leitenden Polymeren vorhandenen Anionen gegen die über das Salz zugefügten neuen Anionen ist es vorteilhaft, den Anionenaustausch gegebenenfalls auch mehrfach zu wiederholen, indem das aus dem vorangegangenen Austausch isolierte leitende Polymere erneut eingesetzt wird.

Als Lösemittel für den erfindungsgemäßen Anionenaustausch eignen sich alle Lösemittel, die das eingesetzte leitende Polymere in der oxidierten (dotierten) Form sowie das das neue Anion enthaltende Salz lösen können. Das entstehende modifizierte leitende Polymere darf zwar, muß jedoch nicht in diesem Lösemittel löslich sein. Als geeignete Lösemittel seien beispielsweise genannt: Aceton, Acetonitril, Benzonitril, γ-Butyrolacton, Cyanessigsäuremethylester, Dichlormethan, Diethylether, Dimethoxyethan, Dimethylcarbonat, N,N-Dimethylformamid, Dimethylsulfoxid, Dioxan, Essigsäureethylester, 3-Methoxypropionitril, N-Methylpyrrolidon, Nitrobenzol, Nitromethan, Nitropropan, Propionitril, Propylencarbonat, Schwefeldioxid, Sulfolan, Tetrahydrofuran, Tetrahydronaphthalin, Trichlorethen, Triethylphosphat. Es können auch Gemische mehrerer Lösemittel eingesetzt werden.

Die für den Anionenaustausch benötigte Lösung des eingesetzten leitenden Polymeren und des Salzes kann sowohl durch gleichzeitiges Versetzen beider Komponenten mit einem gemeinsamen Lösemittel als auch durch Auflösen des einen Bestandteils und Hinzufügen des zweiten Bestandteils erzeugt werden. Ferner ist es möglich, beide Komponenten getrennt in dem gleichen oder in verschiedenen, aber miteinander mischbaren Lösemitteln aufzulösen und erst danach zu vereinen.

Diese Möglichkeit ist zu bevorzugen, falls das modifizierte leitende Polymere in der Reaktionslösung schwerlöslich oder unlöslich ist.

Der Anionenaustausch wird vorzugsweise bei Raumtemperatur durchgeführt. Die Temperatur kann allerdings auch in einem größeren Bereich variiert werden, der nach unten durch die Erstarrungstemperatur und nach oben durch die Siedetemperatur des Lösemittelsystems begrenzt wird und zumeist im Bereich von -60 bis 80 °C liegt. Bei Lösemitteln, die unterhalb oder wenig oberhalb der Raumtemperatur sieden, ist die Anwendung von erhöhtem Druck vorteilhaft.

Die Dauer des Anionenaustausches hängt ab von der Geschwindigkeit der Gleichgewichtseinstellung in dem verwendeten Polymer-Salz-Lösemittel-System und beträgt üblicherweise weniger als eine Stunde. Bei schwerlöslichen, beziehungsweise wenig dissoziierten Polymeren oder Salzen kann der Anionenaustausch aber auch bis zu 24 Stunden dauern.

Zur Isolierung des modifizierten elektrisch leitenden Polymeren nach dem Anionenaustausch wird die Lösung durch Verdampfen des Lösemittels zur Trockene eingeengt. Falls das modifizierte leitende Polymere aufgrund eines Überschreitens des Löslichkeitsprodukts während des Anionenaustsusches bereits ausgefallen ist, kann dieses beispielsweise durch Filtration isoliert werden. Eine ebenfalls geeignete Variante besteht darin, das modifizierte Polymere durch Vermischen der Lösung mit einem weiteren Lösemittel, das mit dem für den Anionenaustausch eingesetzten Lösemittel mischbar ist und das modifizierte Polymere nicht löst, auszufällen und beispielsweise durch Filtration abzutrennen. Das feste Rohprodukt wird mit einem Lösemittel gewaschen, welches das modifizierte leitende Polymere nicht löst, das eingesetzte Salz jedoch löst. Nach dem erfindungsgemäßen Verfahren wird das modifizierte leitende Polymere im allgemeinen in Ausbeuten von 80 bis 100 % erhalten.

Die Erfindung wird durch die nachfolgenden Beispiele näher erläutert. Die in den Beispielen angegebenen Teile und Prozente beziehen sich, sofern nicht anders vermerkt, auf das Gewicht. Die spezifische Leitfähigkeit wirde mittels Vierpunktmessungen an Preßlingen bestimmt. Das thermische Zersetzungsverhalten wurde durch Thermogravimetrie (TG) und Differentialscanningkalorimetrie (DSC) bestimmt. Die UV/VIS/NIR-Spektren wurden an Lösungen in Acetonitril aufgenommen. Die einzelnen Molmassen und die Molmassenverteilung wurde an der neutralen (undotierten) Form der leitenden Polymeren, die beispielsweise durch elektrochemische Reduktion erhalten wurde, mittels Massenspektroskopie (MS) und Gelpermeationschromatographie (GPC) bestimmt.

**Beispiel 1**

Das für dieses Beispiel eingesetzte Poly(3-methoxythiophen)tetrafluoroborat wurde folgendermaßen hergestellt: 4,34 Teile Tetraethylammoniumtetrafluoroborat, 4,56 Teile 3-Methoxythiophen und 250 Teile Acetonitril wurden in eine ungeteilte Elektrolysezelle mit Kühlmantel gegeben. Die Kathode bestand aus V2A-Stahl-Blechen von 80 mm Länge, 55 mm Breite. Als Anode wurde ein Kohlenstoff-Filz (Flächengewicht ca. 0,3 kg/m$^2$, spez. Oberfläche (BET) ca. 1,5 m$^2$/g), von 80 mm Länge, 55 mm Breite und 3 mm Dicke eingesetzt (beidseitige geometrische Fläche ca. 90 cm$^2$). Die Anode wurde in einem Abstand von 2 cm parallel zur Kathode befestigt, getrennt über einen Abstandshalter aus Polypropylen-Netz. Bei einer Elektrolysetemperatur von 20 °C und einem Anodenstrom von 400 mA erhielt man eine Zellenspannung von 5 bis 11 Volt. Nach der Hälfte der theoretisch benötigten Strommenge wurde die mit den Oligomeren beladene

Anode gegen eine neue ausgetauscht und nach Verbrauch der theoretischen Strommenge wurde die Elektrolyse beendet. Die mit dem Rohprodukt beladenen Anoden wurden jeweils sofort nach dem Austausch getrocknet und in ein Bad mit Methylenchlorid gestellt und dort mehrfach längere Zeit digeriert. Nach dem erneuten Trocknen wurden die mit den Oligomeren beladenen Kohlenstoff-Filze in einem Bad mit Acetonitril solange digeriert, bis die Oligomeren praktisch vollständig in Lösung gegangen waren. Die tief dunkelblaue Lösung wurde im Rotationsverdampfer zur Trockene eingeengt. Das Rohprodukt wurde mechanisch zerkleinert, mit Wasser gewaschen, getrocknet, 12 h mit Methylenchlorid digeriert, anschließend abfiltriert und getrocknet. Zur weiteren Reinigung wurde das erhaltene Material erneut in Acetonitril gelöst und 0,5 h bei 10000 U/min zentrifugiert und das Zentrifugat im Rotationsverdampfer zur Trockene eingeengt. Es wurden 1,92 Teile eines bronzemetallisch glänzenden Feststoffs erhalten. Die Elementaranalyse lieferte folgende Werte: 44,5 % C, 3,2 % H, 22,1 % S, 9,4 % F. Ein Pulverpreßling des gemahlenen Produktes besaß eine spezifische Leitfähigkeit von $1{,}8 \bullet 10^{-3}$ S/cm. Bei der DTG wurde bie 245 °C ein Gewichtsverlust von weniger als 10 % beobachtet. Die DSC zeigte ein Maximum bei 325 °C. Im Massenspektrum der undotierten Form wurden die Molekülionen des Pentameren (m/e = 562) und Hexameren (m/e = 674) nachgewiesen. Die GPC der undotierten Form ergab, daß mehr als 80 % des Produktes aus Pentameren und Hexameren bestanden. Im UV/VIS/NIR-Spektrum in Tetrahydrofuran zeigte das undotierte Pentamere ein Maximum bei $\lambda$ = 460 nm, das undotierte Hexamere ein Maximum bei $\lambda$ = 486 nm.

14,0 g dieses Poly(3-methoxythiophen)-tetrafluoroborats wurden in 2 $dm^3$ Acetonitril gelöst. Unter Rühren wurden 56 g Tetraethylammoniumtrifluormethansulfonat zugesetzt. Die Lösung wurde ca 1 h gerührt und dann im Rotationsverdampfer zur Trockene eingeengt. Der Rückstand wurde zweimal mit je 500 $cm^3$ Dichlormethan digeriert, über einen Glasfiltertiegel der Porengröße G3 filtriert und getrocknet. Das Rohprodukt (13,4 g) wurde in 1 $dm^3$ Acetonitril gelöst und erneut dem oben beschriebenen Arbeitsgang unterzogen. Es wurden 12,5 g eines bronzemetallisch glänzenden Feststoffs erhalten. Die Elementaranalyse lieferte folgende Werte: 43,3 % C, 3,2 % H, 25,3 % S, 6,6 % F. Ein Pulverpreßling des gemahlenen Produkts besaß eine spezifische Leitfähigkeit von $1{,}3 \bullet 10^{-3}$ S/cm. Bei der TG wurde bis 220 °C ein Gewichtsverlust von weniger als 10 % beobachtet. Die DSC zeigte ein exothermes Maximum bei 340 °C. Das Produkt war in verschiedenen organischen Lösemitteln, beispielsweise in Acetonitril besser löslich als das eingesetzte Produkt. Das UV/VIS/NIR-Spektrum, das Massenspektrum sowie die GPC der undotierten Form lieferten Daten, die mit den am eingesetzten Produkt gemessenen Daten identisch waren.

## Beispiel 2

Zunächst wurde ein Poly(3-methoxythiophen)-tetrafluoroborat hergestellt:

56,5 Teile 3-Methoxythiophen, 54,3 Teile Tetraethylammoniumtetrafluoroborat und 1500 Teile Acetonitril wurden in eine trogförmige, ungeteilte Elektrolysezelle gegeben. In der Mitte der Zelle war eine wassergekühlte Hohlkathode aus V2A-Stahl von 170 mm Länge und 170 mm Breite angeordnet. Zu beiden Seiten im Abstand von 2 cm parallel zur Kathode befand sich jeweils eine Anode aus Kohlenstoff-Filz (Flächengewicht 0,4 $kg/m^2$, spez. Oberfläche (BET) ca. 1,5 $m^2/g$), von 170 mm Länge, 170 mm Breite und 4 mm Dicke. Zwischen der Kathode und den Anoden befand sich jeweils ein Polypropylen-Netz als Abstandshalter. Bei einer Elektrolysetemperatur von 25 °C und einem Anodenstrom von 4 A erhielt man eine Zellenspannung von 5 bis 11 Volt. Nach Verbrauch der theoretisch erforderlichen Strommenge wurde die Elektrolyse beendet. Die mit dem Rohprodukt beladenen Anoden wurden jeweils sofort getrocknet und in ein Bad mit Methylenchlorid gestellt und dort mehrfach längere Zeit digeriert. Nach dem erneuten Trocknen wurden die mit den Oligomeren beladenen Kohlenstoff-Filze in einem Bad mit Acetonitril solange digeriert, bis die Oligomeren praktisch vollständig in Lösung gegangen waren. Die tief dunkelblaue Lösung wurde über einen Glasfiltertiegel der Größe G3 filtriert und das Filtrat im Rotationsverdampfer zur Trockene eingeengt. Das Rohprodukt wurde mechanisch zerkleinert, mit Wasser gewaschen, getrocknet, 12 h mit Methylenchlorid digeriert, anschließend abfiltriert und getrocknet. Es wurden 24,2 Teile eines bronzemetallisch glänzenden Feststoffs erhalten. Die Elementaranalyse lieferte folgende Werte: 44,4 % C, 3,2 % H, 23,2 % S, 7,5 % F. Ein Pulverpreßling des gemahlenen Produktes besaß eine spezifische Leitfähigkeit von $2{,}1 \bullet 10^{-3}$ S/cm. Bei der DTG wurde bis 260 °C ein Gewichtsverlust von weniger als 10 % beobachtet. Die DSC zeigte ein Maximum bei 310 °C. Im Massenspektrum der undotierten Form wurden die Molekülionen des Pentameren (m/e = 562) und Hexameren (m/e = 674) nachgewiesen. Die GPC der undotierten Form ergab, daß mehr als 90 % des Produktes aus Pentameren und Hexameren bestanden. Im UV/VIS/NIR-Spektrum in Tetrahydrofuran zeigte das undotierte Pentamere ein Maximum bei $\lambda$ = 460 nm, das undotierte Hexamere ein Maximum bei $\lambda$ = 486 nm.

14,0 g dieses Poly(3-methoxythiophen)-tetrafluoroborats wurden in 2 $dm^3$ Acetonitril gelöst. Unter Rühren wurden 77 g Tetrabutylammoniumhexafluorophosphat zugesetzt. Die Lösung wurde ca. 1 h gerührt. Bereits ausgefallenes Rohprodukt wurde über einen Glasfiltertiegel der Porengröße G3 abfiltriert. Der Rückstand wurde zweimal mit je 500 $cm^3$ Dichlormethan digeriert, über einen Glasfiltertiegel der Porengröße G3 filtriert und getrocknet. Das restliche Rohprodukt wurde durch Einengen der Lösung im Rotationsverdampfer isoliert und ebenfalls zweimal mit je 500 $cm^3$ Dichlormethan digeriert, über einen Glasfiltertiegel der Porengröße G 3 filtriert und getrocknet. Die vereinigten Rohprodukte (13,0 g) wurden in 2 $dm^3$ Acetonitril gelöst und erneut dem oben beschriebenen Arbeitsgang unterzogen. Es wurden 11,8 g eines bronzemetallisch glänzenden Feststoffs erhalten. Die Elementaranalyse liefert folgende Werte: 42,2 % C, 2,9 % H, 20,7 % S, 3,8 % P, 13,4 % F. Ein Pulverpreßling des gemahlenen Produkts besaß eine spezifische Leitfähigkeit von $2{,}2 \cdot 10^{-3}$ S/cm. Die thermische Stabilität war gegenüber dem eingesetzten Material verbessert. Bei der TG wurde bis 270 °C ein Gewichtsverlust von weniger als 10 % beobachtet. Die DSC zeigte ein exothermes Maximum bei 340 °C. Das Produkt war in verschiedenen organischen Lösemitteln, beispielsweise in Acetonitril löslich. Das UV/VIS/NIR-Spektrum, das Massenspektrum sowie die GPC lieferten Daten, die mit den für das Ausgangsmaterial beschriebenen Daten übereinstimmen.

**Beispiel 3**

Das für dieses Beispiel eingesetzte Poly(3-methoxythiophen)tetrafluoroborat wurde hergestellt wie in Beispiel 2 beschrieben.
14,0 g dieses Poly(3-methoxythiophen)-tetrafluoroborats wurden in 1,8 $dm^3$ Acetonitril gelöst. Unter Rühren wurde eine Lösung von 60,3 g Tetrabutylammonium-p-toluolsulfonat in 200 $cm^3$ Acetonitril zugesetzt. Die Lösung wurde ca. 1 h gerührt. Bereits ausgefallenes Rohprodukt wurde über einen Glasfiltertiegel der Porengröße G3 abfiltriert, zweimal mit je 500 $cm^3$ Dichlormethan gewaschen und getrocknet. Das restliche Rohprodukt wurde durch Einengen der Lösung im Rotationsverdampfer isoliert und ebenfalls zweimal mit je 500 $cm^3$ Dichlormethan digeriert, über einen Glasfiltertiegel der Porengröße G3 filtriert und getrocknet. Die vereinigten Rohprodukte (9,2 g) wurden mit 2 $dm^3$ Acetonitril versetzt, durch Filtration über einen Glasfiltertiegel der Porengröße G3 von einem unlöslichen Anteil befreit und erneut dem oben beschriebenen Arbeitsgang unterzogen. Es wurden 7,45 g eines bronzemetallisch glänzenden Feststoffs erhalten. Die Elementaranalyse lieferte folgende Werte: 47,7 % C, 3,5 % H, 23,6 % S, <0,3 % F. Ein Pulverpreßling des gemahlenen Produkts besaß eine spezifische Leitfähigkeit von $3{,}4 \cdot 10^{-4}$ S/cm. Die thermische Stabilität war gegenüber dem eingesetzten Material verbessert. Die der TG wurde bis 300 °C ein Gewichtsverlust von weniger als 10 % beobachtet. Die DSC zeigte ein exothermes Maximum bei 335 °C. Das UV/VIS/NIR-Spektrum, das Massenspektrum sowie die GPC der undotierten Form lieferten Daten, die mit den für das eingesetzte Material beschriebenen Daten identisch waren.

**Beispiel 4**

Das für dieses Beispiel eingesetzte Poly(3-methoxythiophen)tetrafluoroborat wurde hergestellt wie in Beispiel 2 beschrieben.
14,0 g dieses Poly(3-methoxythiophen)-tetrafluoroborats wurden in 2,0 $dm^3$ Acetonitril gelöst und unter Rühren zu einer Lösung von 3,0 g (Methacrylsäuremethylester-Methacrylsäure-Copolymer)-Natrium-Salz in 2,0 $cm^3$ Wasser zugesetzt. Die Lösung wurde ca. 1 h gerührt und danach mit 50%iger wäßriger Tetrafluorborsäure auf pH < 5 eingestellt. Das ausgefallene Rohprodukt wurde über einen Glasfiltertiegel der Porengröße G3 abfiltriert, zweimal mit je 500 $cm^3$ Wasser gewaschen und getrocknet. Anschließend wurde das Produkt gemahlen, zweimal mit je 500 $cm^3$ Dichlormethan gewaschen und getrocknet. Es wurden 12,1 g eines blauen Feststoffs erhalten. Die Elementaranalyse lieferte folgende Werte: 41,3 % C, 2,9 % H, 21,3 % S, 7,3 % F. Ein Pulverpreßling des gemahlenen Produkts besaß eine spezifische Leitfähigkeit von $1{,}4 \cdot 10^{-3}$ S/cm. Bei der TG wurde bis 270 °C ein Gewichtsverlust von weniger als 10 % beobachtet. Die DSC zeigte ein exothermes Maximum bei 340 °C. Das Produkt besaß bessere Filmbildeeigenschaften und größeres Haftvermögen auf Polyethylenterephthalat als das eingesetzte Material.

**Beispiel 5**

Zunächst wurde ein Poly(3-methoxythiophen)-tetrachloroferrat hergestellt:
11,4 Teile 3-Methoxythiophen wurden in 200 Teilen Acetonitril gelöst und mit 73,1 Teilen wasserfreiem Eisen(III)chlorid versetzt. Die Lösung wurde 1 h gerührt und dann in 500 Teile Methanol eingerührt. Der ausgefallene Niederschlag wurde mit Methanol gewaschen, bis das Filtrat farblos war. Nach dem Trocknen wurde das Rohprodukt mechanisch zerkleinert, mehrfach mit Methylenchlorid digeriert und

über einen Glasfiltertiegel der Porengröße G3 filtriert und getrocknet. Aus dem gereinigten Rohprodukt wurde durch mehrstündiges Ausrühren mit Acetonitril der lösliche Anteil extrahiert und durch Verdampfen des Lösemittels im Rotationsverdampfer isoliert. Es wurden 3,8 Teile eines bronzemetallisch glänzenden Feststoffs erhalten. Die Elementaranalyse lieferte folgende Werte: 38,5 % C, 2,7 % H, 20,5 % S, 17,3 % Cl, 6,9 % Fe. Ein Pulverpreßling des gemahlenen Produkts besaß eine spezifische Leitfähigkeit von $1,6 \bullet 10^{-3}$ S/cm. Bei der TG wurde bis 220 °C ein Gewichtsverlust von weniger als 10 % beobachtet. Die DSC zeigte ein exothermes Maximum bei 290 °C. 6,7 g dieses Poly(3-methoxythiophen)tetrachloroferrats wurden in 3,8 $dm^3$ Acetonitril gelöst. Unter Rühren wurde eine Lösung von 33 g Tetrabutylammoniumtetrafluoroborat in 200 $cm^3$ Acetonitril zugesetzt. Die Lösung wurde ca. 1 h gerührt. Bereits ausgefallenes Rohprodukts wurde über einen Glasfiltertiegel der Porengröße G3 abfiltriert, zweimal mit je 500 $cm^3$ Dichlormethan gewaschen und getrocknet. Das restliche Rohprodukt wurde durch Einengen der Lösung im Rotationsverdampfer isoliert und ebenfalls zweimal mit je 500 $cm^3$ Dichlormethan digeriert, über einen Glasfiltertiegel der Porengröße G3 filtriert und getrocknet. Die vereinigten Rohprodukte (6,2 g) wurden mit 2 $dm^3$ Acetonitril versetzt; durch Filtration über einen Glasfiltertiegel von einem unlöslichen Anteil befreit und erneut dem oben beschriebenen Arbeitsgang unterzogen. Das Produkt wurde mit Wasser gewaschen und getrocknet. Es wurden 3,8 g eines bronzemetallisch glänzenden Feststoffs erhalten. Die Elementaranalyse lieferte folgende Werte: 23,0 % C, 1,6 % H, 12,9 % S, 32,8 % F, 2,4 % Cl. Ein Pulverpreßling des gemahlenen Produkts besaß eine spezifische Leitfähigkeit von $3,3 \bullet 10^{-4}$ S/cm. Die thermische Stabilität war gegenüber dem eingesetzten Material deutlich verbessert. Be der TG wurde bis 290 °C ein Gewichtsverlust von weniger als 10 % beobachtet. Die DSC zeigte ein exothermes Maximum bei 330 °C. Das Produkt war in verschiedenen organischen Lösemitteln, beispielsweise in Acetonitril, besser löslich als das eingesetzte Material.

**Ansprüche**

1. Modifiziertes, intrinsisch elektrisch leitendes Polymeres in der oxidierten (dotierten) Form, bestehend aus wenigstens einem polymeren Radikalkation und einer dazu äquivalenten Menge wenigstens eines Anions,
dadurch gekennzeichnet,
daß das polymere Radikalkation im statistischen Mittel besteht aus 20 bis 100 % Struktureinheiten, die sich durch Verknüpfung in 2-Stellung und/oder 5-Stellung von mindestens einem Monomeren der Formel (I) ableiten

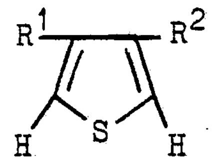 (I),

worin
$R^1$ eine $C_2$-$C_{22}$-Alkylgruppe, $-CH_2O(CH_2CH_2O)_nCH_3$ mit n = 1 bis 4, eine $C_1$-$C_{12}$-Alkoxygruppe oder $-O(CH_2CH_2O)_nCH_3$ mit n = 1 bis 4 und
$R^2$ ein Wasserstoffatom, eine $C_1$-$C_{12}$-Alkylgruppe oder eine $C_1$-$C_{12}$-Alkoxygruppe darstellen,
0 bis 80 % Struktureinheiten, die sich von mindestens einem elektronenreichen Heteroaromaten, welcher elektrisch leitende Polymere bilden kann und mit den Monomeren (I) copolymerisierbar ist, ableiten,
und das Anion im statistischen Mittel besteht aus 0 bis 100 % wenigstens eines anorganischen Anions aus der Gruppe der Halogenide, Pseudohalogenide, Halogenokomplexanionen eines Elements der Gruppen 3a, 4a und 5a des Periodensystems der Elemente, Oxokomplexanionen eines Elements der Gruppen 3a, 4a, 5a, 6a und 7a und anionischen Komplexe der Übergangsmetalle, 100 bis 0 % wenigstens eines monomeren oder polymeren organischen Anions mit wenigstens einem Atom oder wenigstens einer funktionellen Gruppe, das/die wenigstens eine negative Ladungen tragen kann und die konjugate Base zu einer Brönsted-Säure darstellt,
wobei der chemische Aufbau und der Polymerisationsgrad des polymeren Radikalkations unabhängig vom jeweils eingebauten Anion sind.

2. Modifiziertes, intrinsisch elektrisch leitendes Polymeres nach Anspruch 1, dadurch gekennzeichnet, daß das polymere Radikalkation aus 3 bis 100 Struktureinheiten besteht.

3. Modifiziertes, intrinsisch elektrisch leitendes Polymeres nach Anspruch 1, dadurch gekennzeichnet, daß 50 bis 100 Gew.-% des Anions ein Tetrafluoroborat- und/oder Hexafluorophosphatanion sind.

4. Modifiziertes, intrinsisch elektrisch leitendes Polymeres nach Anspruch 1, dadurch gekennzeichnet, daß 10 bis 100 Gew.-% des Anions ein Phenolat-, Carboxylat, Phosphonat- und/oder Sulfonatanion sind.

5. Verfahren zur Herstellung des modifizierten elektrisch leitenden Polymeren gemäß Anspruch 1 durch Austausch der Anionen in einem löslichen elektrisch leitenden Polymeren, dadurch gekennzeichnet, daß 10 bis 100 % der Anionen gegen

wenigstens ein anorganisches Anion oder ein monomeres oder polymeres organisches Anion in Lösung in Gegenwart eines gelösten, das neue Anion enthaltenden Salzes ausgetauscht werden, wobei der Anionenaustausch durch Einstellung des Lösungsgleichgewichts unter Berücksichtigung der Löslichkeitsprodukte der anwesenden Salze erfolgt.

6. Verfahren nach Anspruch 5, dadurch gekennzeichnet, daß ein elektrisch leitendes Polymeres eingesetzt wird, dessen Radikalkation aus 3 bis 100 Struktureinheiten besteht.

7. Verfahren nach Anspruch 5, dadurch gekennzeichnet, daß 50 bis 100 Gew.-% des Anions gegen ein Tetrafluoroborat-und/oder Hexafluorophosphatanion ausgetauscht werden.

8. Verfahren nach Anspruch 5, dadurch gekennzeichnet, daß 10 bis 100 Gew.-% des Anions gegen ein Phenolat-, Carboxylat-, Phosphonat- und/oder Sulfonatanion ausgetauscht werden.

Patentansprüche für folgende Vertragstaaten ES, GR

1. Verfahren zur Herstellung eines modifizierten, intrinsisch elektrisch leitenden Polymeren in der oxidierten (dotierten) Form, bestehend aus wenigstens einem polymeren Radikalkation und einer dazu äquivalenten Menge wenigstens eines Anions, wobei das polymere Radikalkation im statistischen Mittel besteht aus 20 bis 100 % Struktureinheiten, die sich durch Verknüpfung in 2-Stellung und/oder 5-Stellung von mindestens einem Monomeren der Formel (I) ableiten

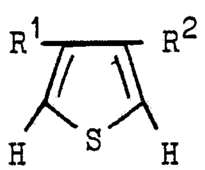
(I),

worin
$R^1$ eine $C_2$-$C_{22}$-Alkylgruppe, $-CH_2O(CH_2CH_2O)_nCH_3$ mit n = 1 bis 4, eine $C_1$-$C_{12}$-Alkoxygruppe oder $-O(CH_2CH_2O)_nCH_3$ mit n = 1 bis 4 und
$R^2$ ein Wasserstoffatom, eine $C_1$-$C_{12}$-Alkylgruppe oder eine $C_1$-$C_{12}$-Alkoxygruppe darstellen,
0 bis 80 % Struktureinheiten, die sich von mindestens einem elektronenreichen Heteroaromaten, welcher elektrisch leitende Polymere bilden kann und mit den Monomeren (I) copolymerisierbar ist, ableiten,
und das Anion im statistischen Mittel besteht aus 0 bis 100 % wenigstens eines anorganischen Anions aus der Gruppe der Halogenide, Pseudohalogenide, Halogenokomplexanionen eines Elements der Gruppen 3a, 4a und 5a des Periodensystems der Elemente, Oxokomplexanionen eines Elements der Gruppen 3a, 4a, 5a, 6a und 7a und anionischen Komplexe der Übergangsmetalle, 100 bis 0 % wenigstens eines monomeren oder polymeren organischen Anions mit wenigstens einem Atom oder wenigstens einer funktionellen Gruppe, das/die wenigstens eine negative Ladungen tragen kann und die konjugate Base zu einer Brönsted-Säure darstellt,
wobei der chemische Aufbau und der Polymerisationsgrad des polymeren Radikalkations unabhängig vom jeweils eingebauten Anion sind, durch Austausch der Anionen in einem löslichen elektrisch leitenden Polymeren, dadurch gekennzeichnet, daß 10 bis 100 % der Anionen gegen wenigstens ein organisches Anion oder ein monomeres oder polymeres organisches Anion in Lösung in Gegenwart eines gelösten, das neue Anion enthaltenden Salzes ausgetauscht werden, wobei der Anionenaustausch durch Einstellung des Lösungsgleichgewichts unter Berücksichtigung der Löslichkeitsprodukte der anwesenden Salze erfolgt.

2. Verfahren nach Anspruch 1, dadurch gekennzeichnet, daß ein intrinsisch elektrisch leitendes Polymeres eingesetzt wird, dessen Radikalkation aus 3 bis 100 Struktureinheiten besteht.

3. Verfahren nach Anspruch 1, dadurch gekennzeichnet, daß 50 bis 100 Gew.-% des Anions gegen ein Tetrafluoroborat-und/oder Hexafluorophosphatanion ausgetauscht werden.

4. Verfahren nach Anspruch 1, dadurch gekennzeichnet, daß 10 bis 100 Gew.-% des Anions gegen ein Phenolat-, Carboxylat-, Phosphonat- und/oder Sulfonatanion ausgetauscht werden.